# EUROPÄISCHE PATENTSCHRIFT

(11) **EP 1 792 102 B1**
(45) Veröffentlichungstag und Bekanntmachung des Hinweises auf die Patenterteilung: **18.03.2009**
(21) Anmeldenummer: 05774430.2
(22) Anmeldetag: 11.08.2005
(51) Int. Cl.: F16H 7/12, F16D 13/00

(54) **SPANNVORRICHTUNG MIT MECHANISCHER DÄMPFUNG FÜR EINEN ZUGMITTELTRIEB**
CLAMPING DEVICE WITH MECHANICAL DAMPING FOR A TRACTION MECHANISM DRIVE
DISPOSITIF DE SERRAGE A AMORTISSEMENT MECANIQUE POUR UN ENTRAINEMENT A MOYEN DE TRACTION

(30) Priorität: 23.09.2004 DE 102004046092
(43) Veröffentlichungstag der Anmeldung: 06.06.2007
(73) Patentinhaber: Schaeffler KG, 91074 Herzogenaurach (DE)
(72) Erfinder: MACK, Stefan, 91054 Erlangen (DE); HARTMANN, Bernd, 91085 Weisendorf (DE); MENNERAT, Thomas, 91074 Herzogenaurach (DE); KAISER, Jörg, 91475 Lonnerstadt (DE); WILHELM, Manfred, West Bloomfield, Michigan 48322 (US)
(86) Internationale Anmeldenummer: PCT/EP2005/008712
(87) Internationale Veröffentlichungsnummer: WO 2006/032328

(56) Entgegenhaltungen:
- DE-A1- 10 248 352
- DE-B- 2 055 678

## Beschreibung

### Gebiet der Erfindung

Die Erfindung betrifft eine Spannvorrichtung mit mechanischer Dämpfung für einen Zugmitteltrieb, insbesondere nach dem Oberbegriff des Patentanspruchs 1, und wie sie aus der DE10248352A bekannt ist.

### Hintergrund der Erfindung

In der DE 43 43 429 C2 ist eine Spannvorrichtung mit mechanischer Dämpfung offenbart, die für einen Zugmitteltrieb vorgesehen ist, mit einem Spannarm, der an einem Ende eine Spannrolle trägt und an seinem anderen Ende über eine drehfest verbundene Welle in einem Gehäuse drehbar gelagert ist und sich mittels einer Torsions- und Druckfeder an dem Gehäuse federnd abstützt, wobei das freie Ende der Welle in drehfester Verbindung mit einer Reibscheibe steht und zwischen der Reibscheibe und einer axialen Anlagefläche des Gehäuses ein Reibbelag angeordnet ist. Die Anlagefläche des Gehäuses weist eine Vielzahl von scharfkantigen, in axialer Richtung vorstehenden Vorsprüngen auf, die sich in den Reibbelag eingraben. Dadurch ist der Reibbelag mit der Anlagefläche des Gehäuses fest verbunden, während die Dämpfungsbewegung zwischen dem Reibbelag und der Reibscheibe stattfindet. Diese Lösung setzt einen relativ weichen Reibbelag voraus, der wenig standfest ist. Außerdem tritt an dem Reibbelag starke Erhitzung auf, da die stählerne Reibscheibe die Reibwärme nur schlecht ableitet. Auch die hohen Temperaturen bedingen einen erhöhten Verschleiß des Reibbelags und verminderte Dämpfungsleistung.

### Aufgabe der Erfindung

Der Erfindung liegt deshalb die Aufgabe zugrunde, eine Spannvorrichtung mit mechanischer Dämpfung für Zugmitteltriebe zu schaffen, die sich durch niedrigen Reibbelagverschleiß und hohe Dämpfungsleistung auszeichnet.

### Zusammenfassung der Erfindung

Die Aufgabe der Erfindung wird erfindungsgemäß durch die Merkmale des unabhängigen Patentanspruchs 1 gelöst.

Die erfindungsgemäße Spannvorrichtung umfasst eine Reibscheibe sowie einen Reibbelag, die überkorrespondierende, zusammenwirkende und als Verzahnung ausgebildete Kontaktfläche formschlüssig und damit spielfrei zur Übertragung eines Reibelementes in beide Drehrichtungen verbunden sind. Durch den spielfreien Formschluss zwischen der Reibscheibe und dem Reibbelag werden ein Anlagewechsel des Reibbelags zwischen der Reibscheibe und der axialen Anlagefläche des Gehäuses sicher verhindert und eine damit verbundene Geräuschentwicklung vermieden. Durch eine entsprechende Lage und Größe der Kontaktflächen können die in den Kontaktflächen auftretenden Kräfte und damit deren Verformung und Verschleiß minimiert werden.

Gemäß einer vorteilhaften weiteren Ausgestaltung der Erfindung ist eine Überdeckung zwischen einem weicheren Reibbelag und einer härteren Reibscheibe vorgesehen, wodurch sich gleichzeitig eine spielfreie Verzahnung zwischen diesen Bauteilen einstellt, die sich vorteilhaft auf die Geräuschemission auswirkt.

Die drehsymmetrische Form der Kontaktflächen bewirkt vorteilhaft eine gleiche Belastung in beiden Drehrichtungen der Reihen. Das aus Leichtmetall hergestellte Gehäuse der Spannvorrichtung weist eine große Wärmespeicherkapazität, gute Wärmeleistung und eine große kühlen der Oberfläche auf, was sich vorteilhaft auf die sich einstellende Temperatur der Reibfläche des Reibbelags auswirkt.

Als eine bevorzugte erfindungsgemäße Variante der Reibscheiben und Reibbeläge dient eine Reibscheiben, die eine ebene, in der Grundform kreisförmige Einsenkung für einen Reibbelag besitzt, der an seinem Umfang vorzugsweise vier gleichmäßig verteilte, halbellipsenförmige Einbuchtungen mit Kontaktflächen aufweist, die mit Kontaktflächen entsprechender Ausbuchtungen der Reibscheibe in Eingriff stehen.

Durch die periphere Lage der Kontaktflächen der halbellipsenförmigen Ein- und ausbuchtungen des Reibbelags bzw. der Reibscheibe ist deren Belastung und damit deren Verformung und Verschleiß minimiert.

Dasselbe gilt auch, wenn die Kontaktfläche der Reibscheibe und die Höhe Kontaktfläche des dazu passenden Reibbelags eine Polygonform oder eine Vieleckform aufweisen.

Die für die Spielfreiheit erforderliche Überdeckung zwischen den halbellipsenförmigen bzw. den polygonen Kontaktflächen wird durch verformbare Minifixierzähne auf den Kontaktflächen der Sonderreibbeläge verwirklicht.

Die Minifixierzähne, die einstückig mit den Kontaktflächen verbunden und radial angeordnet sind, werden beim Einpressen der Reibbeläge in die Einsenkungen der Reibscheiben zwischen den Kontaktflächen verformt und überbrücken so das zwischen diesen herrschende Spiel. Durch den spielfreien Formschluss kann das Reibmoment spielfrei in beide Drehrichtungen übertragen werden.

Eine vorteilhafte Weiterentwicklung der Erfindung besteht darin, dass die Reibscheibe und der Reibbelag eine gleiche Stirnverzahnung aufweisen, deren Zahnflanken als Kontaktflächen dienen. Aufgrund der Stirnzahngeometrie zentriert sich der Reibbelag von selbst auf der Reibscheibe und ist dadurch sehr montagefreundlich. Das Reibmoment wird auch hier spielfrei in beide Drehrichtungen übertragen.

Eine vorteilhafte Ausbildung der Erfindung besteht darin, dass am Umfang der Reibscheibe und des Reibbelags je eine Axialverzahnung und am Umfang einer anderen Reibscheibe und eines anderen Reibbelags je eine Radialverzahnung angeordnet sind, wobei die Verzahnungen als Zahnkupplungen ausgebildet sind und deren Zahnflanken als Kontaktflächen dienen.

Auch bei diesen Varianten gilt, dass die Übertragung des Reibmoments am Umfang der Reibscheiben bzw. der Reibbeläge zu minimierten Kräften führt. Die Überdeckung der Kontaktflächen hat auch hier einen Presssitz zwischen den Reibscheiben und den Reibbelägen zur Folge, der zur spielfreien Übertragung des Reibmoments in beide Drehrichtungen und zur axialen Fixierung der Reibbeläge an den Reibscheiben dient.

Der mit Ausnahme der stirnverzahnten Variante mögliche Einbau eines Dämpfungselements zwischen Reibscheibe und Reibbelag vermindert die Geräuschübertragung in diesem Bereich.

### Kurze Beschreibung der Zeichnungen

Weitere Merkmale der Erfindung ergeben sich aus der folgenden Beschreibung und den Zeichnungen, in denen Ausführungsbeispiele der Erfindung schematisch dargestellt sind.

Es zeigen:
- Figur 1: einen Längsschnitt durch eine mechanisch gedämpfte Spannvorrichtung;
- Figur 2: perspektivische Ansicht einer Reibscheibe und eines dazu passenden Reibbelags mit halbelliptischen Kontaktflächen;
- Figur 3: perspektivische Ansicht einer Reibscheibe und eines dazu passenden Reibbelags mit einer polygonalen Kontaktflä- che;
- Figur 4: perspektivische Ansicht einer Reibscheibe und eines dazu passenden Reibbelags mit einer zwölfeckigen Kontaktflä- che;
- Figur 5: perspektivische Ansicht einer Reibscheibe und des dazu passenden Reibbelags mit Stirnverzahnung;
- Figur 6: perspektivische Ansicht einer Reibscheibe und des dazu passenden Reibbelags mit axialer Verzahnung am Umfang;
- Figur 7: perspektivische Ansicht einer Reibscheibe und des dazu passenden Reibbelags mit radialer Verzahnung am Um- fang.

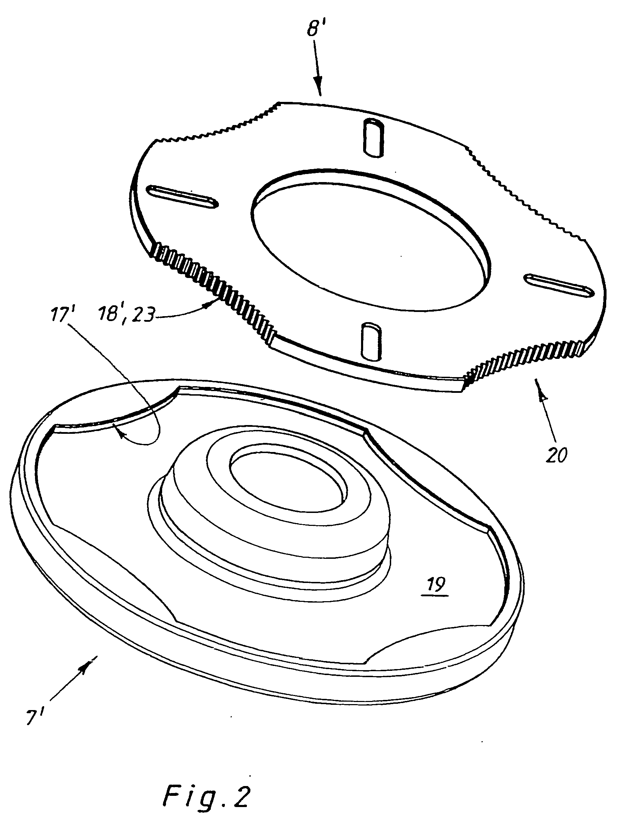

Die Figuren 2 bis 4 fallen nicht unter dem Schutzumfang.

### Ausführliche Beschreibung der Zeichnungen

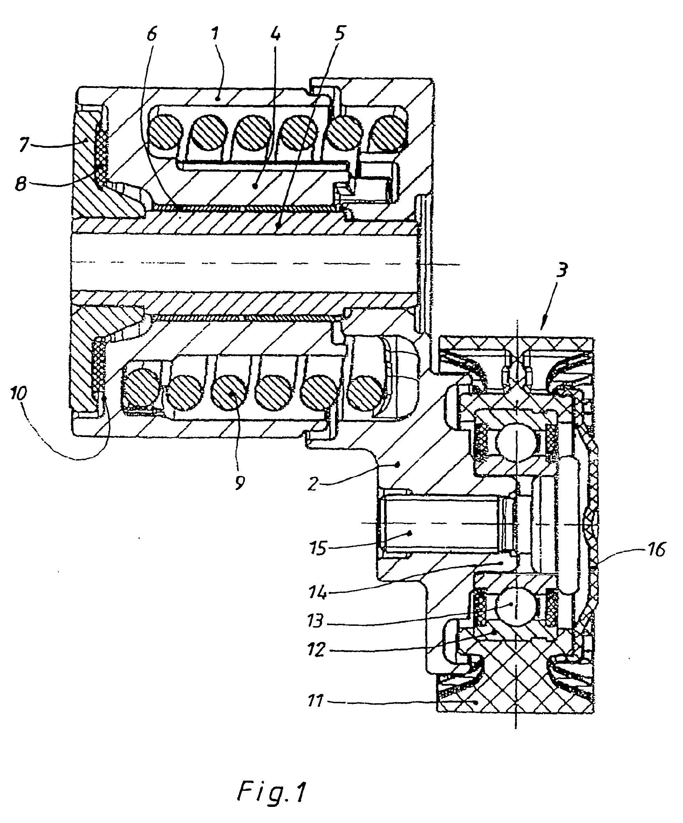

In Figur 1 ist ein Längsschnitt durch eine Spannvorrichtung für einen Zugmitteltrieb dargestellt, die eine mechanische Dämpfung aufweist.

Die Spannvorrichtung besteht im Wesentlichen aus einem Gehäuse 1, einem Spannarm 2 und einer Spannrolle 3. Das Gehäuse 1 ist tassenartig ausgebildet und in seinem Inneren mit einer konzentrischen Nabe 4 einstückig verbunden. In der Nabe 4 ist eine mit dem Spannarm 2 über einen Presssitz drehfest verbundene Welle 5 in einem Gleitlager 6 drehbar gelagert. Die Welle 5 ist an ihrem freien Ende ebenfalls durch Presssitz mit einer Reibscheibe 7 drehfest verbunden, die in formschlüssiger Verbindung mit einem Reibbelag 8 steht. Der Spannarm 2 wird über eine als Torsionsfeder wirkende Schraubenfeder 9 in Richtung eines nicht dargestellten Zugmittels, z. B. eines Riemens oder einer Kette, vorgespannt. Die Schraubenfeder 9 befindet sich im Inneren des tassenförmigen Gehäuses 1 und ist mit je einem Windungsende am Spannarm 2 und am Gehäuse 1 fixiert. Die Schraubenfeder 9 übt eine Druckkraft auf das Gehäuse 1 und den Spannarm 2 aus, die über die Welle 5 auf die Reibscheibe 7 übertragen wird und als Anpresskraft des Reibbelags 8 auf eine Anlagefläche 10 des Gehäuses 1 wirkt.

Die Spannrolle 3 ist als Kunststoffteil 11 ausgebildet und auf einem Außenring 12 eines Wälzlagers 13 befestigt. Dieses ist auf einem Bund 14 des Spannarms 2 zentriert und durch eine Schraube 15 mit diesem verbunden. Das Wälzlager 13 ist beidseitig abgedichtet und durch eine Schutzklappe 16 abgedeckt, die in die Spannrolle 3 einrastet.

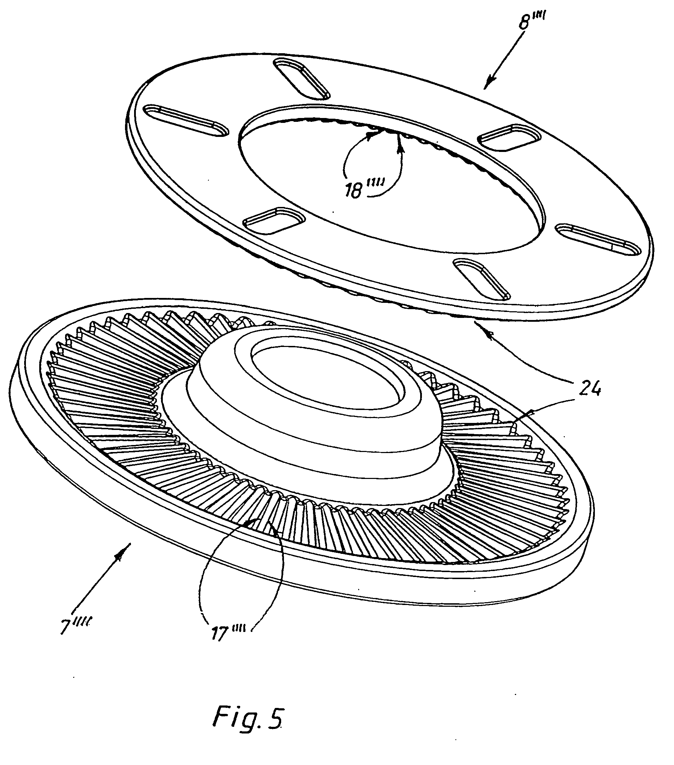

Die erfiridungsgemäßen Varianten der Reibscheibe 7 bzw. des Reibbelags 8 sind als Reibscheiben 7' bis 7""" bzw. als Reibbeläge 8' bis 8""" in den Figuren 5 bis 7 dargestellt, wobei die Figuren 2,3 und 4 und deren Beschreibung nicht unter den Schutzumfang der Erfindung fallen.

Alle Reibbeläge 8' bis 8""" sind mit den zugehörigen Reibscheiben 7' bis 7""" durch Formschluss verbunden und stehen mit der axialen Anlagefläche 10 des Gehäuses 1 in Reibkontakt. Der Formschluss erfolgt über Kontaktflächen 17' bis 17""" der Reibscheiben 7' bis 7""" und über Kontaktflächen 18' bis 18""" der Reibbeläge 8' bis 8""". Die Kontaktflächen 17' bis 17""" und 18' bis 18""" sind im gesamten Umfangsbereich der Reibscheiben 7' bis 7""" und der Reibbeläge 8' bis 8""" angeordnet, wodurch die zu übertragenden Kräfte minimiert werden. Da die Kontaktflächen17 bis 17""" und 18' bis 18""" eine drehsymmetrische Form aufweisen, sind sie für eine Kraftübertragung in beide Drehrichtungen gleichermaßen geeignet. Da die zusammenpassenden Kontaktflächen 17' bis 17""" und 18' bis 18""" der Reibscheiben 7' bis 7""" und Reibbeläge 8' bis 8""" eine Überdeckung aufweisen, ist zwischen diesen ein Presssitz mit spielfreiem Formschluss gewährleistet, mit Ausnahme der Lösung von Figur 5.

In Figur 2 ist die Reibscheibe 7' dargestellt. Diese besitzt eine in der Grundform kreisförmige Einsenkung 19 zur Aufnahme des Reibbelags 8'. Der Reibbelag 8' weist an seinem Umfang vier gleichmäßig verteilte halbellipsenförmige Einbuchtungen 20 mit den Kontaktflächen 18' auf, die mit den vier Kontaktflächen 17' der Reibscheibe 7' in Eingriff stehen.

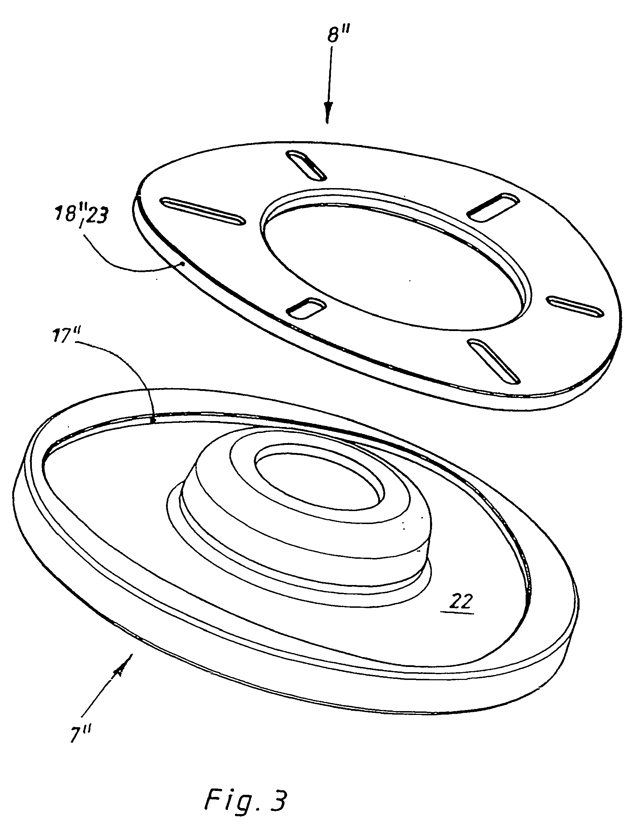

Die in Figur 3 dargestellte Kontaktfläche 17" einer ebenen Einsenkung 22 der Reibscheibe 7" und die Kontaktfläche 18" des dazu passenden Reibbelags 8" weisen eine Polygonform auf. Auch diese eignet sich zur Übertragung des Reibmoments in beide Drehrichtungen der Reibscheibe 7".

Die halbellipsenförmigen Kontaktflächen 18' des Reibbelags 8' der Figur 2 und die polygonen Kontaktflächen 18" des Reibbelags 8" der Figur 3 weisen zum Erreichen einer Überdeckung einstückig mit den Kontaktflächen 18', 18" ausgebildete und radial auf diesen angeordnete Minifixierzähne 23 auf. Diese verformen sich beim Einpressen der Reibbeläge 8', 8" in die Einsenkungen 19, 20 der Reibscheiben 7", 7"' und fixieren dort die Reibbeläge 8', 8" spielfrei.

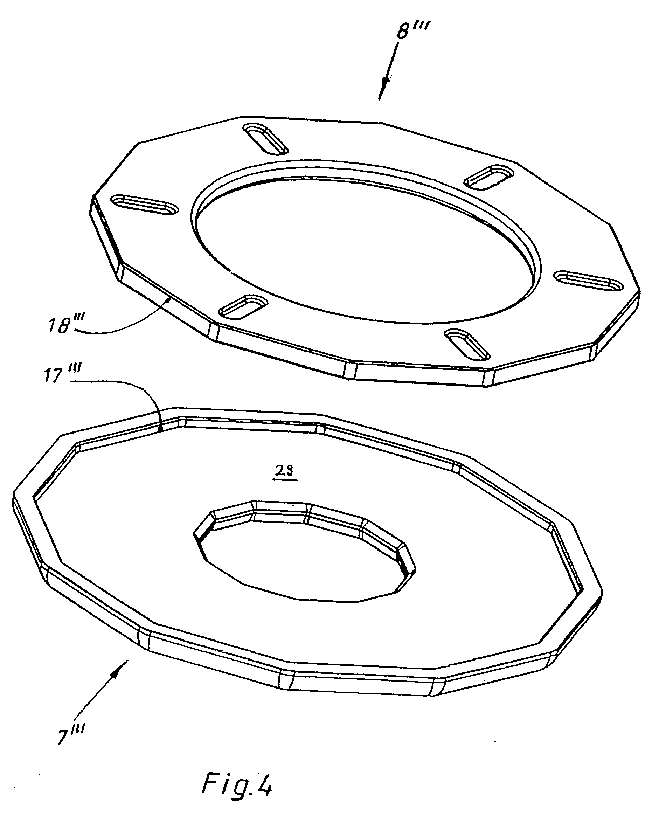

Die Figur 4 zeigt die Reibscheibe 7"' mit der Kontaktfläche 17"' einer ebenen Einsenkung 31 und den dazu passenden Reibbelag 8"', der eine Zwölfeckform aufweist. Die Dicke der Reibbeläge 8', 8", 8'" ist so gewählt, dass diese um die Verschleißhöhe über die Einsenkungen 19, 22, 31 hinausragen.

In Figur 5 sind die Reibscheibe 7"" und der Reibbelag 8"" dargestellt, die eine gleiche Stirnverzahnung 24 aufweisen. Deren Zahnflanken dienen als Kontaktflächen 17"", 18"". Aufgrund der Stirnzahngeometrie zentriert sich der Reibbelag 8"" von selbst. Auch hier wird das Reibmoment spielfrei in beide Drehrichtungen übertragen.

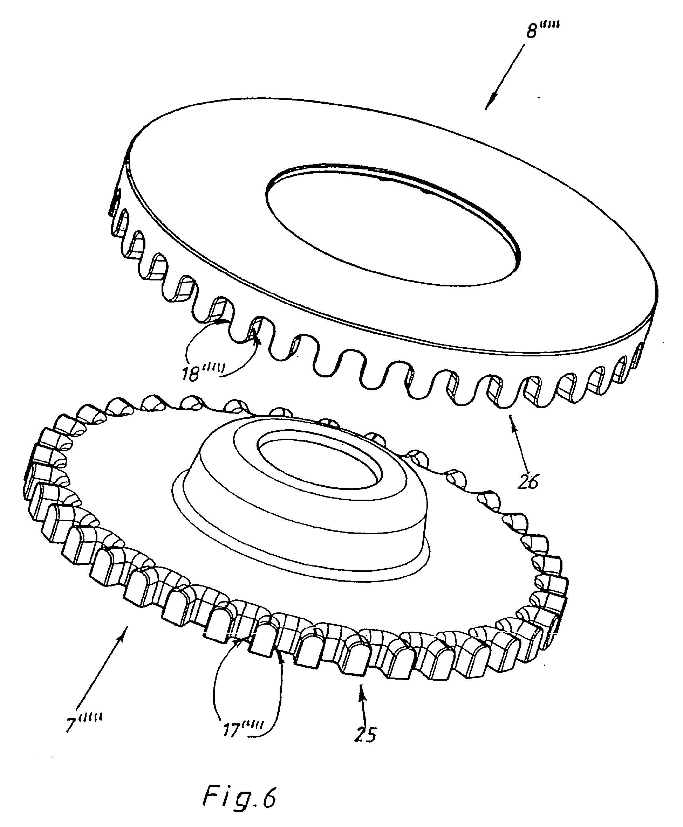

In Figur 6 sind die Reibscheibe 7""' und der Reibbelag 8""' dargestellt, an deren Umfang je eine Axialverzahnung 25, 26 angeordnet ist.

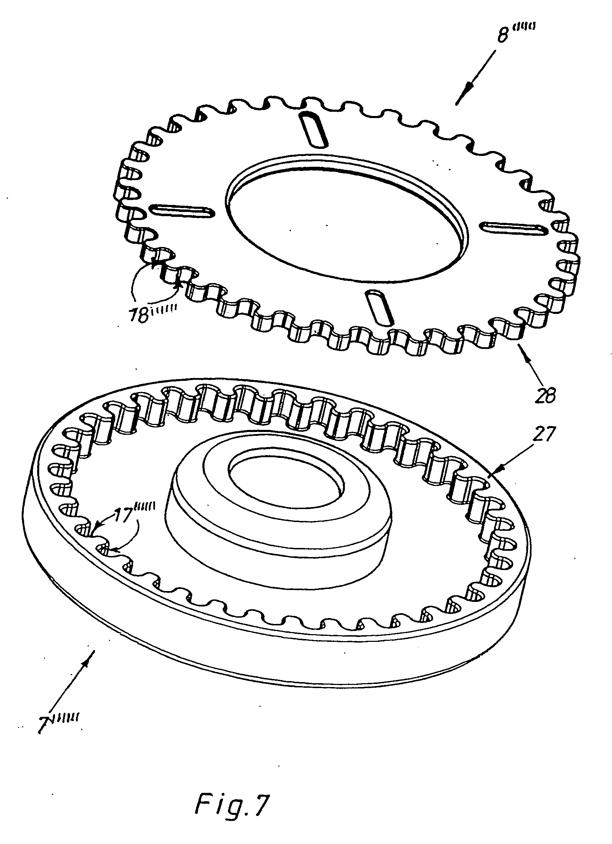

Entsprechend zeigt Figur 7 die Reibscheibe 7""" und den Reibbelag 8""", an deren Umfang je eine Radialverzahnung 27, 28 vorgesehen ist. Die Verzahnungen 25, 26 und 27, 28 sind als Zahnkupplungen ausgebildet, deren Zahnflanken als Kontaktflächen 17""', 18""' und 17""", 18""" dienen.

Über die angeführten Beispiele hinaus fallen alle denkbaren drehsymmetrischen Kontaktflächen von Reibscheiben und dazu passende Reibbeläge unter das Schutzbegehren.

### Bezugszeichen

- 1: Gehäuse
- 2: Spannarm
- 3: Spannrolle
- 4: Nabe
- 5: Welle
- 6: Gleitlager
- 7: Reibscheibe
- 7' bis 7""": Reibscheibe
- 8: Reibbelag
- 8' bis 8""": Reibbelag
- 9: Schraubenfeder
- 10: Anlagefläche
- 11: Kunststoffteil
- 12: Außenring
- 13: Wälzlager
- 14: Bund
- 15: Schraube
- 16: Schutzkappe
- 17' bis 17""": Kontaktfläche der Reibscheibe
- 18' bis 18""": Kontaktfläche des Reibbelags
- 19: Einsenkung
- 20: Einbuchtung
- 21: Ausbuchtung
- 22: Einsenkung
- 23: Minifixierzahn
- 24: Stirnverzahnung
- 25: radiale Außenverzahnung
- 26: axiale Verzahnung
- 27: radiale Innenverzahnung
- 28: radiale Außenverzahnung
- 29: Einsenkung

## Patentansprüche

1. Spannvorrichtung mit mechanischer Dämpfung für einen Zugmitteltrieb, mit einem Spannarm, der an einem Ende eine Spannrolle trägt und an seinem anderen Ende über eine drehfest verbundene Welle in einem Gehäuse drehbar gelagert ist und sich mittels einer Torsions- und Druckfeder an dem Gehäuse federnd abstützt, wobei das freie Ende der Welle in drehfester Verbindung mit einer Reibscheibe steht und zwischen der Reibscheibe und einer axialen Anlagefläche des Gehäuses ein Reibbelag angeordnet ist, **dadurch gekennzeichnet, dass** die Reibscheibe (7' bis 7""") mit dem Reibbelag (8' bis 8"' "') über korrespondierende, zusammenpassende, als Verzahnung ausgebildete Kontaktflächen (17' bis 17""" und 18' bis 18""") formschlüssig und spielfrei zur Übertragung eines Reibmomentes in beide Drehrichtungen verbunden sind.

2. Spannvorrichtung nach Anspruch 1, **dadurch gekennzeichnet, dass** die zusammenpassenden Kontaktflächen (17' bis 17""" und 18' bis 18""") der Reibscheiben (7' bis 7""") und Reibbeläge (8' bis 8""") eine Überdeckung aufweisen, die durch Zusammenpressen zu dem spielfreien Formschluss führt.

3. Spannvorrichtung nach Anspruch 1, **dadurch gekennzeichnet, dass** die Kontaktflächen (17' bis 17""" und 18' bis 18""") drehsymmetrisch ausgebildet sind.

4. Spannvorrichtung nach Anspruch 2, **dadurch gekennzeichnet, dass** die Reibscheiben (7') eine ebene, in der Grundform kreisförmige Einsenkung (19) für den Reibbelag (8') besitzt, der an seinem Umfang vorzugsweise vier gleichmäßig verteilte, halbellipsenförmige Einbuchtungen (20) mit Kontaktflächen (18') aufweist, die mit Kontaktflächen (17') entsprechender Ausbuchtungen (21) der Reibscheibe (7') in Eingriff stehen.

5. Spannvorrichtung nach einem der Ansprüche 1 bis 4 , **dadurch gekennzeichnet, dass** die Kontaktfläche (17"), die eine ebene Einsenkung (22) der Reibscheibe (7") begrenzt und die Kontaktfläche (18") des dazu passenden Reibbelags (8") eine Polygonform aufweisen.

6. Spannvorrichtung nach einem der Ansprüche 1 bis 5, **dadurch gekennzeichnet, dass** verformbare Minifixierzähne (23) vorgesehen sind, die einstückig mit den Kontaktflächen (18', 18") verbunden und radial angeordnet sind.

7. Spannvorrichtung nach einem der vorhergehenden Ansprüche 1 bis 7, **dadurch gekennzeichnet, dass** die Reibscheibe (7"") und der Reibbelag (8"") eine gleiche Stirnverzahnung (24) aufweisen, deren Zahnflanken als Kontaktflächen (17"", 18"") dienen.

8. Spannvorrichtung nach einem der Ansprüche 1 bis 8 , **dadurch gekennzeichnet, dass** am Umfang der Reibscheibe (7""') und des Reibbelags (8""') je eine Axialverzahnung (25, 26) und am Umfang der der Reibscheibe (7""") und des Reibbelags (8""") je eine Radialverzahnung (27, 28) angeordnet sind, wobei die Verzahnungen (25, 26 und 27, 28) als Zahnkupplungen ausgebildet sind und deren Zahnflanken als Kontaktflächen (17""', 18""' und 17""", 18""") dienen.

## Claims

1. Tensioning apparatus with mechanical damping for a flexible drive, having a tensioning arm which carries a tensioning roller at one end and is mounted rotatably in a housing at its other end via a shaft, which is connected in a rotationally fixed manner, and is supported resiliently on the housing by means of a torsion and compression spring, the free end of the shaft being in a rotationally fixed connection with a friction disc and a friction lining being arranged between the friction disc and an axial contact face of the housing, **characterized in that** the friction disc (7' to 7'''''') is connected positively and without play to the friction lining (8' to 8'''''') via corresponding contact faces (17' to 17'''''' and 18' to 18''''''), which fit together and are configured as toothing, for transmitting a frictional moment in both rotational directions.

2. Tensioning apparatus according to Claim 1, **characterized in that** those contact faces (17' to 17'''''' and 18' to 18'''''') of the friction discs (7' to 7'''''') and friction linings (8' to 8'''''') which fit together overlap, which leads to the positive connection without play as a result of them being pressed together.

3. Tensioning apparatus according to Claim 1, **characterized in that** the contact faces (17' to 17'''''' , and 18' to 18'''''') are of rotationally symmetrical configuration.

4. Tensioning apparatus according to Claim 2, **characterized in that** the friction discs (7') have a planar hollow (19) of circular basic shape for the friction lining (8') which preferably has, on its circumference, four uniformly distributed, hemiellipsoidal indentations (20) with contact faces (18') which are in engagement with contact faces (17') of corresponding bulges (21) of the friction disc (7').

5. Tensioning apparatus according to one of Claims 1 to 4, **characterized in that** the contact face (17'') which delimits a planar hollow (22) of the friction disc (7'') and the contact face (18'') of the friction lining (8'') which matches it have a polygonal shape.

6. Tensioning apparatus according to one of Claims 1 to 5, **characterized in that** deformable miniature fixing teeth (23) are provided which are connected integrally to the contact faces (18', 18'') and are arranged radially.

7. Tensioning apparatus according to one of preceding Claims 1 to 6, **characterized in that** the friction disc (7'''') and the friction lining (8'''') have an identical spur toothing system (24), the tooth flanks of which serve as contact faces (17'''', 18'''').

8. Tensioning apparatus according to one of Claims 1 to 7, **characterized in that** in each case one axial toothing system (25, 26) is arranged on the circumference of the friction disc (7''''') and of the friction lining (8''''') and in each case one radial toothing system (27, 28) is arranged on the circumference of the friction disc (7'''''') and of the friction lining (8''''''), the toothing systems (25, 26 and 27, 28) being configured as denture clutches and their tooth flanks serving as contact faces (17''''', 18''''' and 17'''''', 18''''').

## Revendications

1. Dispositif de serrage à amortissement mécanique pour un entraînement à moyen de traction, comprenant un bras de serrage qui porte à une extrémité un rouleau de serrage et qui est monté à son autre extrémité de manière à pouvoir tourner dans un boîtier par le biais d'un arbre connecté de manière solidaire en rotation, et qui s'appuie au moyen d'un ressort de torsion et de pression de manière élastique sur le boîtier, l'extrémité libre de l'arbre étant en liaison solidaire en rotation avec un disque de friction et une garniture de friction étant disposée entre le disque de friction et une surface d'appui axiale du boîtier, **caractérisé en ce que** le disque de friction (7' à 7'''''') avec la garniture de friction (8' à 8'''''') sont connectés par engagement par correspondance géométrique et sans jeu en vue de transmettre un couple de friction dans les deux sens de rotation, par le biais de surfaces de contact (17' à 17'''''' et 18' à 18'''''') réalisées sous forme de denture, s'adaptant mutuellement et se correspondant les unes aux autres.

2. Dispositif de serrage selon la revendication 1, **caractérisé en ce que** les surfaces de contact s'adaptant mutuellement (17' à 17'''''' et 18' à 18'''''') des disques de friction (7' à 7'''''') et des garnitures de friction (8' à 8'''''') présentent un recouvrement qui, par compression, donne lieu à l'engagement par correspondance géométrique sans jeu.

3. Dispositif de serrage selon la revendication 1, **caractérisé en ce que** les surfaces de contact (17' à 17'''''' et 18' à 18'''''') sont réalisées avec une symétrie de révolution.

4. Dispositif de serrage selon la revendication 2, **caractérisé en ce que** le disque de friction (7') possède une dépression (19) plane, de forme de base circulaire pour la garniture de friction (8'), qui présente à sa périphérie de préférence quatre renfoncements (20) en forme de demi-ellipses répartis uniformément avec des surfaces de contact (18') qui sont en prise avec des surfaces de contact (17') de renfoncements correspondants (21) du disque de friction (7').

5. Dispositif de serrage selon l'une quelconque des revendications 1 à 4, **caractérisé en ce que** la surface de contact (17") qui délimite une dépression plane (22) du disque de friction (7") et la surface de contact (18") de la garniture de friction (8") adaptée, présentent une forme polygonale.

6. Dispositif de serrage selon l'une quelconque des revendications 1 à 5, **caractérisé en ce que** des dents de minifixation (23) déformables sont prévues, lesquelles sont connectées d'une seule pièce avec les surfaces de contact (18', 18") et sont disposées radialement.

7. Dispositif de serrage selon l'une quelconque des revendications précédentes 1 à 6, **caractérisé en ce que** le disque de friction (7'''') et la garniture de friction (8'''') présentent une denture frontale identique (24), dont les flancs de dents servent de surfaces de contact (17'''', 18'''').

8. Dispositif de serrage selon l'une quelconque des revendications 1 à 7, **caractérisé en ce qu'**à la périphérie du disque de friction (7''''') et de la garniture de friction (8''''') est disposée à chaque fois une denture axiale (25, 26) et à la périphérie du disque de friction (7'''''') et de la garniture de friction (8'''''') est disposée à chaque fois une denture radiale (27, 28), les dentures (25, 26 et 27, 28) étant réalisées sous forme d'accouplements dentés et leurs flancs de dents servant de surfaces de contact (17''''', 18''''' et 17'''''', 18'''''').
